# FASCICULE DE BREVET EUROPEEN

(11) **EP 0 527 669 B1**
(45) Date de publication et mention de la délivrance du brevet: **12.07.1995**
(21) Numéro de dépôt: 92402217.1
(22) Date de dépôt: 03.08.1992
(51) Int. Cl.: F16L 59/12, F16L 59/18, E04F 17/02

(54) **Tuyau isolant pour conduit de cheminée**
Isolierrohr für eine Kaminleitung
Insulated pipe for a chimney conduit

(30) Priorité: 08.08.1991 FR 9110301
(43) Date de publication de la demande: 17.02.1993
(73) Titulaire: Wastyn, Robert, F-59700 Marcq en Baroeul (FR)
(72) Inventeur: Wastyn, Robert, F-59700 Marcq en Baroeul (FR)
(74) Mandataire: Lepage, Jean-Pierre

(56) Documents cités:
- EP-A- 0 148 717
- EP-A- 0 427 598
- FR-A- 1 577 032
- FR-A- 2 436 937
- FR-A- 2 650 052

## Description

L'invention est relative à un tuyau isolant pour conduit de cheminée, destiné à guider l'écoulement des gaz de combustion notamment dans les installations de chauffage industrielles ou domestiques. L'invention trouvera tout particulièrement son application chez les constructeurs de matériels de chauffage.

Toute installation fonctionnant à partir d'un système de combustion produit des gaz d'échappement à haute température qui doivent nécessairement être évacués dans l'atmosphère. Dans le cas qui intéresse le brevet, il a été spécialement retenu l'évacuation des gaz de combustion d'installations de chauffage, c'est-à-dire l'écoulement régulier d'un flux gazeux très chaud pratiquement sans pression.

Actuellement, les fabricants proposent principalement deux types de tuyaux pour conduit de cheminée, le plus simple étant le tuyau réalisé en tôle galvanisée cintrée. Le conduit d'évacuation des gaz chauds est réalisé en emboîtant les différents tuyaux vendus par sections modulaires. Ce type de tuyau est très économique mais requiert certaines précautions d'emploi.

En effet, il n'est absolument pas isolant et par exemple s'il est scellé, il faut nécessairement utiliser des matériaux réfractaires susceptibles de supporter les hautes températures rencontrées. Il est nécessaire d'éviter que ce tube à simple paroi soit posé à proximité d'éléments inflammables tel que du bois comme cela est utilisé pour les poutres ou charpente. Il faut également entretenir soigneusement ce type de tuyau et en particulier refaire à intervalles réguliers le scellement en matériau réfractaire qui a tendance à s'effriter.

Par ailleurs, du fait qu'il soit non isolé, ce tube a tendance à avoir des parois nettement moins chaudes que les gaz de combustion qu'il véhicule, étant donné que celles-ci sont en contact direct avec l'atmosphère ou des éléments de fixation. Par conséquent, les parois font l'objet de phénomènes de condensation accrue et surtout de dépôt de salissures telles que les hydrocarbures lourds, goudrons, suie et autres.

Cela entraîne de devoir procéder très fréquemment à des ramonages. La seconde conséquence de l'absence d'isolation thermique du tuyau est le refroidissement rapide des gaz de combustion, ce qui rend propice la formation de gaz polluants et de matières acides.

De gros progrès ont été accomplis avec la mise au point par les constructeurs de tuyaux isolants emboîtables. Il s'agit d'une réalisation plus coûteuse dans laquelle on forme un tuyau généralement à partir de tôles à double paroi entre lesquelles on insère un matériau isolant. Bons nombres de défauts rencontrés avec le simple tuyau ont pu ainsi être éliminés. En particulier, les gaz de combustion sont nettement moins refroidis, d'où une formation moindre de gaz polluants et de salissures à l'intérieur du tuyau. L'entretien est ainsi largement diminué et à long terme, l'investissement réalisé peut être largement rentabilisé.

Il s'avère tout de même, sur le plan pratique, que le tuyau isolant actuel n'est pas tout à fait parfait. En effet, de par sa fabrication, un pont thermique est créé au niveau de l'emboîtement mâle. Ceci provient du fait qu'il s'agit de la même tôle utilisée pour former la paroi intérieure et la paroi extérieure, le raccord étant réalisé par formage de l'extrémité du tuyau.

Ceci, bien entendu, crée un faible pont thermique localisé qui se traduit dans une installation par une succession de ponts thermiques à chaque raccordement de tubes. Ceci occasionne des défauts qui se traduisent notamment par la formation privilégiée de salissures au niveau des raccords et des refroidissements des gaz de combustion d'autant plus vifs qu'il y a de nombreux raccords.

On connaît également du brevet français n° 2.650.052 des conduits métalliques rigides isolés et leur assemblage. Ce brevet décrit un tuyau isolant pour conduit de cheminée destiné à guider l'écoulement des gaz de combustion notamment dans les installations de chauffage industrielles ou domestiques, qui comprend des raccords emboîtables complémentaires à chaque extrémité et qui est formé par une double paroi métallique.

La paroi intérieure et la paroi extérieure sont maintenues écartées l'une de l'autre par des entretoises métalliques soudées d'une part sur le tuyau intérieur et sur le tuyau extérieur, ce qui sert à maintenir en place les deux tuyaux. La présence de ces entretoises métalliques soudées implique donc qu'il y ait des ponts thermiques et donc une propagation de la chaleur, ces ponts dans le brevet français n° 2.650.052 sont situés à six endroits différents du tuyau puisqu'il y a six entretoises.

Le but principal de la présente invention, telle que caractérisée à la revendication 1, est de présenter un tuyau isolant destiné à former des conduits d'écoulement de cheminée, qui offre l'avantage de présenter une totale absence de pont thermique.

Ainsi, avec l'utilisation du tuyau isolant de la présente invention, les phénomènes d'encrassement localisé au niveau des raccords de tuyaux, rencontrés traditionnellement sont totalement écartés.

Par ailleurs, le tuyau isolant de la présente invention peut être placé à proximité de pièces inflammables, telles que des poutres en bois, charpente ou autres, sans précaution particulière étant donné que la paroi extérieure est à l'abri de tout phénomène de surchauffe.

Le tuyau isolant de la présente invention est très économique d'utilisation car il permet de réduire de façon sensible les frais d'entretien. Sur le plan de sa fabrication, il peut être réalisé de façon industrielle à des coûts très compétitifs et lui permettre ainsi de connaître un large développement.

D'autres buts et avantages de la présente invention apparaîtront au cours de la description qui va suivre qui n'est cependant donnée qu'à titre indicatif.

L'invention sera mieux comprise à la lecture de la description suivante, accompagnée de dessins en annexe, parmi lesquels :
- la figure 1 schématise le tuyau isolant de l'invention en vue de coupe longitudinale,
- la figure 2 schématise la réalisation d'un jonc de fixation par foulage de la tôle externe.

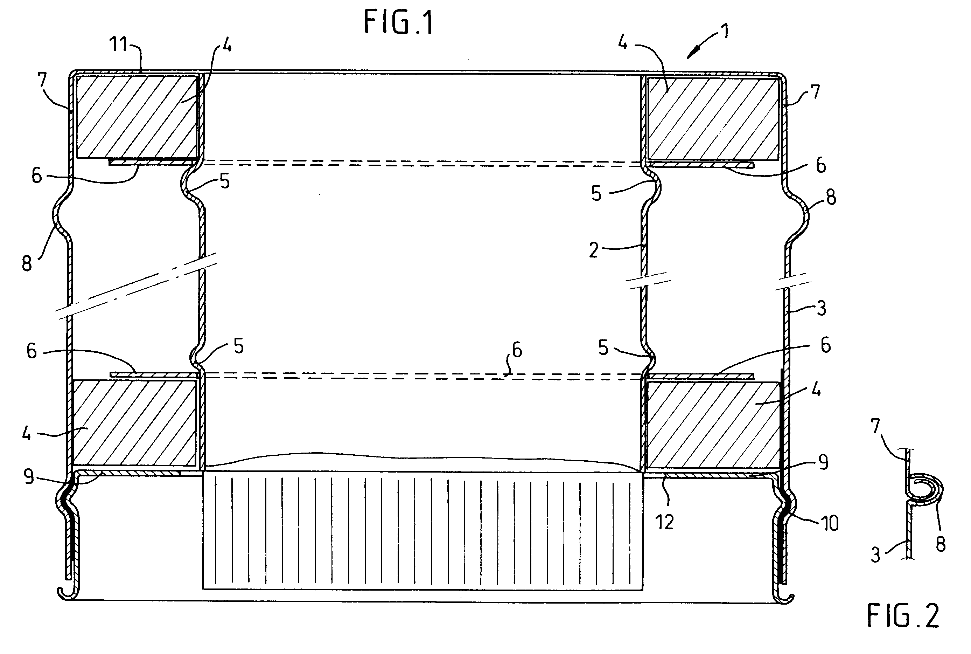

La figure 1 représente un mode préférentiel de réalisation du tuyau isolant qui est illustré en vue de coupe. Le tuyau isolant (1) est constitué en deux parties, une paroi intérieure (2) et une paroi extérieure (3), ces parois tubulaires étant généralement concentriques et rembourrées intérieurement d'un matériau isolant tel que de la laine de roche, non illustrée.

La paroi intérieure (2) peut être par exemple confectionnée à partir de tôles inox ou émail, quant à la paroi extérieure (3), elle peut être confectionnée à partir de tôles inox ou aluminium d'une épaisseur d'environ 6/10ème de millimètre. A titre d'exemple, pour des applications domestiques, on pourra utiliser un diamètre extérieur de tuyau de 200 millimètres pour un diamètre intérieur de paroi (2) de 125 millimètres. Avec un tel écart entre les parois (2 et 3), des essais ont montré que pour une température de gaz intérieure au tuyau (1) de 1000°C, on assiste à une élévation de température de la paroi extérieure (3) de 100°C, ce qui est très raisonnable et compatible avec la majeure partie des matériaux courants.

Selon l'invention, les parois (2 et 3) présentent des moyens d'écartement isolants qui assurent la continuité de l'isolation sur toute la longueur du tuyau (1). Cela signifie que nulle part les parties métalliques de la paroi intérieure (2) sont en contact avec les parties métalliques de la paroi externe (3). Il n'y a donc création d'aucun pont thermique, même au niveau des extrémités du tuyau (1) comme cela se rencontrait traditionnellement.

Selon l'invention, les moyens d'écartement se présentent sous la forme d'une entretoise (4) localisée à chaque extrémité des parois (2 et 3). Ces entretoises (4) assurent le centrage et le positionnement relatif des parois intérieure (2) et extérieure (3) du tuyau (1). Bien entendu, ces entretoises sont réalisées dans un matériau isolant et selon la présente invention, il est préconisé l'utilisation de fibres céramiques qui présentent une excellente aptitude à résister aux températures élevées.

Ces entretoises (4) sont fixées axialement par des butées sans création de pont thermique. Dans l'exemple choisi, les butées intérieures sont assurées par la paroi intérieure et les butées extérieures sont formées par les parois extérieures. L'inverse aurait également pu être envisagé. Les butées intérieures (5) sont formées par des bossages de la paroi intérieure (2) qui forment une excroissance s'opposant au déplacement longitudinal de l'entretoise annulaire (4). La fibre céramique est fragile et par conséquent, il est souhaitable de répartir les contraintes mécaniques et pour cela, on utilise une bague intermédiaire (6) disposée entre la paroi intérieure (2) et la paroi extérieure (3) et supportée par les bossages (5). La rondelle (6) doit être rigide pour supporter la contrainte axiale et il est préconisé l'utilisation d'une tôle de 12/10ème de millimètres pour sa fabrication. En outre, son diamètre sera tel que la bague (6) ne vienne pas en contact avec la paroi extérieure (3) mais suffisant pour supporter l'entretoise (4).

Le diamètre extérieur des rondelles (6) doit donc nécessairement être inférieur au diamètre de la paroi extérieure (3) pour éviter tout pont thermique. Les bossages (5) peuvent être facilement réalisés par déformation mécanique de la paroi intérieure en tôle (2).

En ce qui concerne les butées extérieures, celles-ci sont formées par un repliage interne de l'extrémité supérieure du tube dans le cas du raccord mâle de sorte à enfermer l'entretoise annulaire (4). En pratique, ceci n'est pas commode à réaliser car le repliage intérieur de l'extrémité de la paroi (3) se traduit par l'apparition de faux plis. Aussi préfère-t-on généralement utiliser une butée rapportée (7) formée d'une extrémité en équerre de façon à venir enfermer l'entretoise annulaire (4).

Le raccord de la pièce intermédiaire (7) avec la paroi externe (3) s'obtient par exemple par molletage ou plissage (8) tel que par exemple illustré à la figure 2. Initialement, les extrémités de la pièce (7) et de la paroi (3) sont rabattues en équerre et appliquées bord à bord. Ensuite, à l'aide d'un outillage adéquat, on vient rouler les bords jointifs de façon à former un bourrelet (8). Cependant, on peut également souder, notamment par point ou de façon continue, la pièce (7) sur le tube (3).

La pièce (7) définit un orifice intérieur (11) à travers lequel va pouvoir passer l'embout du tube intérieur (2) à raccorder. Cet orifice (11) doit présenter un diamètre supérieur à celui de la paroi intérieure (2) pour éviter tout contact entre elles et ne pas créer ainsi de pont thermique.

En ce qui concerne la partie femelle du raccord située dans le bas de la figure 1, le calage extérieur de l'entretoise annulaire (4) est assuré par une bague de profondeur (9). Cette bague est emboîtée dans la paroi extérieure (3) de sorte que sa face en équerre vienne s'appliquer contre l'entretoise (4). Bien entendu, le diamètre intérieur (12) de cette bague de profondeur (9) doit être supérieur au diamètre de la paroi intérieure (2) pour éviter tout contact et la création de pont thermique qui en résulterait. Le blocage axial de la bague de profondeur (9) est assuré par un bossage (10) réalisé conjointement avec la paroi extérieure (3) ou par soudure. L'extrémité de la bague de profondeur (9) est évasée pour faciliter l'emboîtement des tubes isolants.

## Revendications

1. Tuyau isolant pour conduit de cheminée, destiné à guider l'écoulement des gaz de combustion notamment dans les installations de chauffage industrielles ou domestiques, qui comprend des raccords emboîtables complémentaires à chaque extrémité et qui est formé d'une double paroi (2,3) métallique interne et externe rempli d'isolant, des moyens d'écartement (4), assurant le centrage et le positionnement relatif des parois interne et externe, étant localisés à au moins une extrémité du tuyau, caractérisé par le fait que ces moyens d'écartement (4) sont réalisés dans un matériau isolant qui assure la continuité de l'isolation au niveau des raccords emboîtables, et que ces moyens (4) sont constitués par des entretoises annulaires fixées axialement, à chaque extrémité du tuyau, par des butées, de telle sorte que nulle part les parties métalliques de la paroi interne (2) sont en contact avec les parties métalliques de la paroi externe (3).

2. Tuyau isolant pour conduit de cheminée, selon la revendication 1, caractérisé par le fait que les entretoises annulaires (4) sont réalisées en fibre céramique.

3. Tuyau isolant pour conduit de cheminée, selon la revendication 1, caractérisé par le fait que les butées intérieures (5) sont assurées par la paroi interne (2).

4. Tuyau isolant pour conduit de cheminée, selon la revendication 3, caractérisé par le fait que les butées intérieures (5) sont formées par des bossages de la paroi intérieure (2) et d'une rondelle d'appui (6).

5. Tuyau isolant pour conduit de cheminée, selon la revendication 1, caractérisé par le fait que les butées extérieures sont formées par les parois (3) externes.

6. Tuyau isolant pour conduit de cheminée, selon la revendication 5, caractérisé par le fait que les butées extérieures sont réalisées à l'aide de bagues (7 et 9) comprenant une face d'appui en équerre et fixées aux extrémités de la paroi externe (3).

7. Tuyau isolant pour conduit de cheminée, selon la revendication 4, caractérisé par le fait que le diamètre extérieur de la rondelle d'appui (6) est inférieur au diamètre de la paroi externe (3).

8. Tuyau isolant pour conduit de cheminée, selon la revendication 6, caractérisé par le fait que le diamètre (11 ; 12) intérieur des bagues (7 ; 9) de butée externe est supérieur au diamètre de la paroi interne (2).

## Claims

1. Insulated pipe for a chimney conduit, for guiding the outflow of combustion gases, viz. in the industrial or domestic heating installations, which comprises complementary jointable connections at each end and which is formed of a double, inner and outer, metal wall (2, 3) filled with insulating material, separating means (4) ensuring the centering and the positioning of the inner and outer walls with respect to each other being situated at at least one end of the pipe, characterized in that these separating means (4) are made of an insulating material which ensures the continuity of the insulation at the level of the jointable connections and that these means (4) are formed by annular spacers axially secured, at each end of the pipe, by abutments, sothat the metal portions of the inner wall (2) are at no location in contact with the metal portions of the outer wall (3).

2. Insulated pipe for a chimney conduit according to claim 1, characterized in that the annular spacers (4) are made of ceramic fibers.

3. Insulated pipe for a chimney conduit according to claim 1, characterized in that the internal abutments (5) are ensured by the inner wall (2).

4. Insulated pipe for a chimney conduit according to claim 3, characterized in that the internal abutments (5) are formed by bosses of the inner wall (2) and a bearing washer (6).

5. Insulated pipe for a chimney conduit according to claim 1, characterized in that the external abutments are formed by the outer walls (3).

6. Insulated pipe for a chimney conduit according to claim 5, characterized in that the external abutments are formed by means of rings (7 and 9) comprising a right-angle bearing face and secured to the ends of the outer wall (3).

7. Insulated pipe for a chimney conduit according to claim 4, characterized in that the outer diameter of the bearing washer (6) is smaller than the diameter of the outer wall (3).

8. Insulated pipe for a chimney conduit according to claim 6, characterized in that the inner diameter of the external abutment rings (7; 9) is larger than the diameter of the inner wall (2).

## Patentansprüche

1. Isolierrohr für eine Kaminleitung, zum Führen des Auslaßes der Verbrennungsgase, nämlich in den industriellen oder Hausheizanlagen, das an jedem Ende sich ergänzende, hineinfügbare Anschlußstücke umfaßt und aus einer Innen- und Außen-Metalldoppelwand (2, 3) gebildet ist, die mit Isoliermaterial gefüllt ist, wobei Spreizmittel (4), die das Zentrieren und das gegenseitige Positionieren der Innen- und Außenwände sichern, an wenigstens einem Ende der Leitung angeordnet sind, dadurch gekennzeichnet, daß diese Spreizmittel (4) aus einem Isoliermaterial hergestellt sind, das die Fortsetzung der Isolation im Bereich der hineinfügbaren Anschlußstücke sichert und diese Mittel (4) aus ringförmigen Abstandstücken gebildet sind, die an jedem Ende der Leitung so durch Anstöße axial befestigt sind, daß die Metallteile der Innenwand (2) an keiner Stelle mit den Metallteilen der Außenwand (3) in Berührung stehen.

2. Isolierrohr für eine Kaminleitung nach Anspruch 1, dadurch gekennzeichnet, daß die ringförmigen Abstandstücke (4) aus Keramikfasern sind.

3. Isolierrohr für eine Kaminleitung nach Anspruch 1, dadurch gekennzeichnet, daß die Innenanstöße (5) von der Innenwand (2) gesichert werden.

4. Isolierrohr für eine Kaminleitung nach Anspruch 3, dadurch gekennzeichnet, daß die Innenanstöße (5) durch Buckel der Innenwand (2) und eine Abstützscheibe (6) gebildet sind.

5. Isolierrohr für eine Kaminleitung nach Anspruch 1, dadurch gekennzeichnet, daß die Außenanstöße von den Außenwänden (3) gebildet werden.

6. Isolierrohr für eine Kaminleitung nach Anspruch 5, dadurch gekennzeichnet, daß die Außenanstöße durch Ringe (7 und 9) gebildet werden, die eine rechtwinklige Abstützfläche umfassen und an den Enden der Außenwand (3) befestigt sind.

7. Isolierrohr für eine Kaminleitung nach Anspruch 4, dadurch gekennzeichnet, daß der Außendurchmesser der Abstützscheibe (6) kleiner als der Durchmesser der Außenwand (3) ist.

8. Isolierrohr für eine Kaminleitung nach Anspruch 6, dadurch gekennzeichnet, daß der Innendurchmesser der Außenanstoßringe (7; 9) größer als der Durchmesser der Innenwand (2) ist.
